(19) Europäisches Patentamt
European Patent Office
Office européen des brevets

(11) **EP 4 683 092 A1**

(12) **EUROPEAN PATENT APPLICATION**
published in accordance with Art. 153(4) EPC

(43) Date of publication:
**21.01.2026  Bulletin 2026/04**

(21) Application number: **23926876.6**

(22) Date of filing: **04.04.2023**

(51) International Patent Classification (IPC):
*H01M 50/46* (2021.01)

(52) Cooperative Patent Classification (CPC):
**H01M 10/052; H01M 50/417; H01M 50/449;
H01M 50/451; H01M 50/46;** Y02E 60/10

(86) International application number:
**PCT/CN2023/086286**

(87) International publication number:
**WO 2024/187524 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2023  CN 202310256215**

(71) Applicant: **Shenzhen Senior Technology Material
Co., Ltd.
Shenzhen, Guangdong 518106 (CN)**

(72) Inventors:
• **TAN, Bin
Shenzhen, Guangdong 518106 (CN)**
• **ZHANG, Delin
Shenzhen, Guangdong 518106 (CN)**

(74) Representative: **Gill Jennings & Every LLP
The Broadgate Tower
20 Primrose Street
London EC2A 2ES (GB)**

(54) **COMPOSITE SEPARATOR AND BATTERY**

(57)    This application provides a composite separator and a battery. In a first aspect, this application provides a composite separator, which includes a base film and an adhesive coating. The adhesive coating includes polyethylene wax particles and inorganic particles. The polyethylene wax particles can play a good adhesive role, prevent dimensional changes caused by release of internal stress, and improve the problem of wrinkling of the separator upon electrolyte injection. The inorganic particles play a supporting role. By adjusting the weight ratio and the size ratio of the polyethylene wax particles and the inorganic particles, and the weight of the polyethylene wax particles per unit area, the air permeability increase before and after providing the adhesive coating and the air permeability increase of the composite separator before and after hot pressing can be reduced on the basis of ensuring the adhesion force of the composite separator, and the electrical performance of the battery can be improved.

FIG. 1

EP 4 683 092 A1

# EP 4 683 092 A1

## Description

This application claims priority to Chinese Patent Application No. 202310256215.9, entitled "Composite Separator and Battery" and filed to China National Intellectual Property Administration on March 16, 2023, the entire contents of which are incorporated by reference in this application.

## TECHNICAL FIELD

This application relates to a composite separator and a battery, and relates to technical field of batteries.

## BACKGROUND

A separator is a thin film with a microporous structure, which plays a crucial role in the performance and safety of a battery as one of four core materials of the battery. Presently, the preparation process of the separator mainly includes wet processing and dry processing. The dry processing involves mixing raw materials such as polymers and additives to form a homogeneous melt, followed by stretching and thermal deformation at a certain temperature. Since the preparation process of the dry processing is free of pollution and has a mature process technology and a low production cost, it accounts for a relatively high proportion in a separator market.

However, due to the dry processing has a characteristic of longitudinally uniaxial stretching, the longitudinal internal stress is not completely released, causing the separator to develop wrinkled surface upon electrolyte injection. As the battery is charged and discharged, solids are precipitated at these wrinkled positions, affecting the performance and safety of the battery.

By applying a surface coating treatment to the separator obtained after stretching in the dry processing, the problem of the wrinkled surface of the separator can be solved at a certain extent. For example, the Chinese invention patent CN 114374058A discloses a coated separator, which includes a base film and an adhesive coating formed by coating with a water-based slurry of polyethylene wax powder. However, the coated separator provided by this patent exhibits a notably higher air permeability increment before and after applying the adhesive coating, and the coated separator prepared by this method further exhibits a notably higher air permeability increment before and after hot pressing, which seriously affects the electrical performance of downstream batteries.

## SUMMARY

This application provides a composite separator including an adhesive coating, which reduces the increase in an air permeability before and after providing the adhesive coating and before and after hot pressing of the composite separator on the basis of ensuring the adhesion force of the composite separator, and improves the electrical performance of the battery.

In a first aspect, this application provides a composite separator. The composite separator includes a base film and an adhesive coating, the adhesive coating is provided at an outermost layer of the composite separator, and the adhesive coating includes polyethylene wax particles and inorganic particles.

The polyethylene wax particles per unit area of the adhesive coating have a weight of 0.2-4 $g/m^2$.

A ratio of D90 of the inorganic particles to D90 of the polyethylene wax particles is (0.3-0.85): 1.

A weight of the inorganic particles accounts for 5-75% by weight of a total weight of the polyethylene wax particles and the inorganic particles.

This application provides a composite separator, including the base film and the adhesive coating, where the base film is obtained by a conventional dry processing with uniaxial stretching in the art. The adhesive coating is provided at the outermost layer of the composite separator, which is capable of being bonded to a positive electrode sheet and/or a negative electrode sheet. In one specific embodiment, the adhesive coating may be directly disposed on an upper surface and/or a lower surface of the base film, or other coatings may be provided between the base film and the adhesive coating, which may be specifically provided according to actual needs.

The adhesive coating includes the polyethylene wax particles, which can play a good adhesive role, prevent dimensional changes caused by the release of the internal stress, and improve a problem of wrinkling of the separator upon electrolyte injection, while the inorganic particles play a supporting role. By adjusting the weight ratio and the size ratio of the polyethylene wax particles and the inorganic particles and the weight of the polyethylene wax particles per unit area, the air permeability increase before and after providing the adhesive coating and before and after hot pressing of the composite separator can be reduced on the basis of ensuring the adhesion force of the composite separator, improving the electrical performance of the battery.

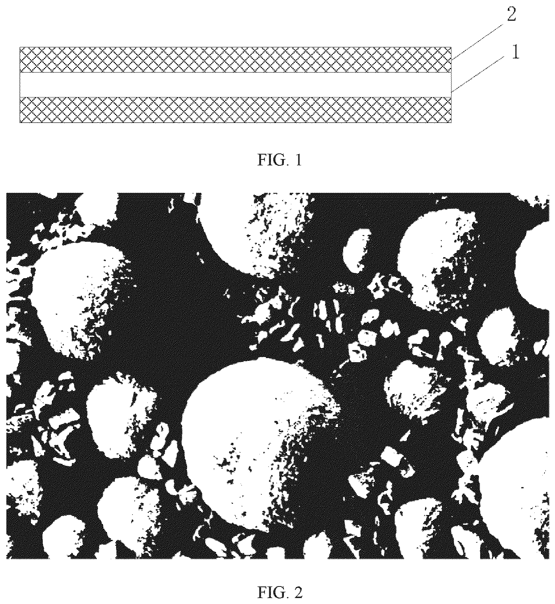

In one embodiment, FIG. 1 is a schematic structural diagram of the composite separator provided by an embodiment of this application. As shown in FIG. 1, the composite separator includes a base film 1 and adhesive coatings 2 disposed on the upper and lower surfaces of the base film. The adhesive coating 2 is provided at the outermost layer of the composite separator and can contact with the positive electrode sheet and the negative electrode sheet. The base film 1 is prepared by the conventional dry processing in the art, such as one of a PP microporous base film, PE microporous base film, PP double-layer base film, PP/PP/PP three-layer coextruded microporous base film, and PP/PE/PP three-layer coextruded microporous base film.

Furthermore, the base film 1 has a thickness of 4-25 $\mu$m, a maximum pore size of 20-60 nm, and a porosity of 20-60%. The thickness has a same definition as that defined commonly in the art, that is, a distance between the upper and lower surfaces of the base film configured for providing the adhesive coating. The maximum pore size refers to a maximum diameter of pores of the base film, which can be determined using a PMI instrument. The porosity refers to a percentage of a total volume of all pores of the base film to a total volume of the base film; and during testing, according to the provisions of GB/T 6673-2001 and GB/T 6672-2001, the length, width and thickness of the separator are measured, and a mass of the sample is weighed using an analytical balance with a resolution of 0.0001g, and the porosity is calculated according to formula 1:

$$P=(1-m/(L*b*d*\rho))*100\% \hspace{2cm} \text{Formula 1.}$$

In the formula 1: P represents the porosity of the separator with an unit of %, m represents the mass of the separator with an unit of g, L represents the length of the separator with an unit of cm, b represents the width of the separator with an unit of cm, d represents the thickness of the separator with an unit of $\mu$m, and $\rho$ represents a density of the raw material with an unit of g/cm$^2$.

FIG. 2 is an electron microscope image of the adhesive coating provided by an embodiment of this application. As shown in FIG. 2, the adhesive coating 2 includes the polyethylene wax particles and the inorganic particles. The polyethylene wax particles can play a good adhesive role, prevent dimensional changes caused by the release of the internal stress, and improve the problem of wrinkling of the separator upon electrolyte injection; while the inorganic particles can play a supporting role, prevent the blockage of the pores in the base film caused by the squeeze deformation of the polyethylene wax particles during the hot pressing process, and reduce the air permeability increase.

It can be understood that the polyethylene wax particles and the inorganic particles are in the form of particles. In a case that the adhesive coating is directly disposed on the surface of the base film, the particles close to the surface of the base film will partially enter the pores of the base film. Meanwhile, the polyethylene wax particles and the inorganic particles are not limited to spheroid form, but can also exist in various forms such as ellipsoids and irregular spheres.

In this application, by adjusting the weight ratio and the size ratio of the polyethylene wax particles to the inorganic particles and the weight of the polyethylene wax particles per unit area, the air permeability increase before and after providing the adhesive coating and before and after hot pressing of the composite separator can be effectively reduced, and the electrical performance of the battery can be improved.

Specifically, the polyethylene wax particles have a weight of 0.2-4 g/m$^2$ per unit area of the adhesive coating, and are specifically selected from 0.2 g/m$^2$, 0.5 g/m$^2$, 1.0 g/m$^2$, 1.5 g/m$^2$, 1.8 g/m$^2$, 2.0 g/m$^2$, 2.5 g/m$^2$, 3.0 g/m$^2$, 3.5 g/m$^2$, 4.0 g/m$^2$, or a range composed of any two of the above values. Further, the polyethylene wax particles have a weight of 0.3-1.5 g/m$^2$ per unit area of the adhesive coating. By controlling the total weight of the polyethylene wax particles per square meter of the adhesive coating, it is possible to balance the adhesion force of the adhesive coating and the air permeability increase before and after providing the adhesive coating and before and after hot pressing of the composite separator.

Specifically, in order to ensure the adhesion force between the adhesive coating and the electrode sheet, the D90 of the inorganic particles should be less than the D90 of the polyethylene wax particles. Further, the ratio of the D90 of the inorganic particles to the D90 of the polyethylene wax particles is (0.3-0.85): 1, which is specifically selected from 0.3:1, 0.5:1, 0.55:1, 0.7:1, 0.8:1, 0.85:1 or a range composed of any two of the above values. Further, the ratio of the D90 of the inorganic particles to the D90 of the polyethylene wax particles is (0.5-0.85): 1. The D90 refers to a particle size when a cumulative particle size distribution of the polyethylene particles/inorganic particles reaches 90%, which can be determined according to GB/T 19077.1-2008.

In one specific embodiment of this application, the D90 of the polyethylene wax is 1-10 $\mu$m; and specifically it is selected from 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m or a range composed of any two of the above values. Further, the D90 of the polyethylene wax is 2-5 $\mu$m. By controlling the D90 of the polyethylene wax particles, on the one hand, it can prevent the excessive thickness of the adhesive coating due to an overly large D90, and on the other hand, it can avoid the problem of pore blockage in the base film due to an overly small D90, thereby avoiding an increase in the air permeability before and after providing the adhesive coating and before and after hot pressing of the composite separator.

In one specific embodiment of this application, a D10 of the polyethylene wax particles should be greater than the maximum pore size of the base film. Further, a ratio of the D10 of the polyethylene wax particles to the maximum pore size of the base film is 3-50. Further, the ratio of the D10 of the polyethylene wax particles to the maximum pore size of the base film is 25-40. The D10 refers to a particle size when a cumulative particle size distribution of the polyethylene wax particles reaches 10%. By controlling the D10 of the polyethylene wax particles, it can effectively prevent pore blockage in the base film caused by the polyethylene wax particles, resulting in an increase in the air permeability increase before and after providing the adhesive coating and before and after hot pressing of the composite separator.

Furthermore, a specific value of the D10 of the polyethylene wax particles can be determined based on the maximum pore size of the base film.

In addition, it should be noted that in a case that the polyethylene wax particles and the inorganic particles have irregular shapes, the particle sizes involved are all equivalent particle sizes.

In one specific embodiment of this application, the polyethylene wax particles have a melting point of 90-130°C. The melting point refers to a temperature when the polyethylene wax particles transform from a solid state to a liquid state. Specifically, it is selected from 90°C, 100°C, 103°C, 105°C, 108°C, 110°C, 112°C, 115°C, 110°C, 118°C, 120°C, 130°C or a range composed of any two of the above values. Further, the polyethylene wax particles have a melting point of 100-120°C. Controlling the melting point of the polyethylene wax microspheres can ensure that the polyethylene wax particles do not melt during the preparation process and the hot pressing process, which avoids the problem of the pore blockage in the base film, thereby avoiding excessive air permeability increase of the adhesive coating and the separator, and meantime avoiding that small deformation of the polyethylene wax particles due to excessive melting point results in lower bonding effect than expected.

In one specific embodiment of this application, the melting point of the polyethylene wax particles depends directly on the number-average molecular weight of the polyethylene wax. Thus, the number-average molecular weight of the polyethylene wax particles is further defined in this application. Specifically, the polyethylene wax particles have a number-average molecular weight of 500-20,000, and further, the polyethylene wax particles have a number-average molecular weight of 1000-5,000. The number-average molecular weight can be determined based on GB/T36214.4-2018.

Specifically, the weight of the inorganic particles accounts for 5-75 wt% of the total weight of the polyethylene wax particles and the inorganic particles, that is, the weight of the inorganic particles/(the weight of the inorganic particles and the weight of the polyethylene wax particles) * 100%=5-75 wt%. Specifically, it is selected from 5 wt%, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, or a range composed of any two of the above values. Further, the weight of the inorganic particles accounts for 25-60 wt% of the total weight of the polyethylene wax particles and the inorganic particles. The inorganic particles mainly play a supporting role. In a case that the weight of the inorganic particles is too low, it may cause excessive deformation of the polyethylene wax particles during the hot pressing process and thus the blockage of the pores in the surface of the base film, thereby affecting the air permeability increase before and after providing the adhesive coating and before and after hot pressing of the composite separator, and affecting the electrical performance of the battery.

In one specific embodiment of this application, the inorganic particles may be one or more of alumina, boehmite, silica, magnesium oxide, and titanium dioxide.

The adhesive coating provided in this application further includes one or more of an adhesive agent, a surfactant, and a dispersant, where the adhesive agent is configured to bond the polyethylene wax and the inorganic particles to the surface of the base film, the dispersant is configured to ensure the dispersion of each component in the adhesive coating, and the surfactant is configured to improve the leveling of the slurry during the coating process.

All of the adhesive agent, the surfactant, and the dispersant may be conventional materials in the art. Specifically, the adhesive agent is one or more of polyacrylate, polyacrylamide, polymethyl methacrylate, polybutyl methacrylate, polyethyl acrylate, styrene-acrylic latex, polyvinyl acetate, styrene-butadiene latex, ethylene-vinyl acetate copolymer, and polyvinyl pyrrolidone; the surfactant is one or more of polyether-modified polysiloxane, alkylphenol polyoxyethylene ether, fatty alcohol polyoxyethylene ether, fatty acid polyoxyethylene ether, fatty amine polyoxyethylene ether, and fluoroalkyl ethoxy alcohol ether; the dispersant is one or more of sodium polyacrylate, ammonium polyacrylate, carboxylate, and sulfonate. Further, the dispersant is one or two of ammonium polyacrylate and sodium polyacrylate.

Further, the weight of the adhesive agent accounts for 2-10 wt% of the total weight of the polyethylene wax particles and the inorganic particles. Further, the weight of the adhesive agent accounts for 3-5 wt% of the total weight of the polyethylene wax particles and the inorganic particles.

Further, the weight of the dispersant accounts for 0.2-5 wt% of the total weight of the inorganic particles. Further, the weight of the dispersant accounts for 0.5-2 wt% of the total weight of the inorganic particles.

During the preparation process of the above-mentioned composite separator, the polyethylene wax particles and the inorganic particles in an emulsion form are dispersed in an aqueous solvent to prepare an adhesive coating slurry, followed by coating the slurry on the surface of the base film obtained by dry-process uniaxial stretching, and drying to obtain the composite separator.

Specifically, the total weight of the polyethylene wax particles and the inorganic particles accounts for 2-50 wt % of the weight of the adhesive coating slurry. Further, the total weight of the polyethylene wax particles and the inorganic particles accounts for 5-20 wt % of the weight of the adhesive coating slurry. The weight of the polyethylene wax particles and the weight of the inorganic particles are carried out in the weight ratio described above.

In a case that the adhesive agent, the surfactant and the dispersant are included in the adhesive coating, the weight of the adhesive agent and the weight of the dispersant are as described above. The surfactant accounts for 0.1-1 wt% of the total weight of the adhesive coating slurry. Further, the weight of the surfactant accounts for 0.2-0.5 wt% of the total weight of the adhesive coating slurry.

In one specific embodiment of this application, the preparation process of the adhesive coating slurry is as follows:

Step 1: adding the dispersant and the inorganic particles to deionized water in sequence and performing dispersion to obtain a first preform;

Step 2: mixing the polyethylene wax particles and deionized water and performing dispersion to obtain a second preform;

Step 3: mixing the first preform and the second preform in proportion and performing dispersion continuously to obtain a first mixture;

Step 4: adding the adhesive agent and the surfactant to the first mixture and performing homogeneous dispersion to obtain the adhesive coating slurry;

further, the dispersion process in each of the above steps has a rotation speed 500-3000 rpm, a time of 5-60 min, and a temperature of 10-30°C;

Step 5: preparing the base film through the drying-process uniaxial stretching according to a conventional method in the art, coating the adhesive coating slurry on the surface of the base film, drying in an oven at 40-70°C, and rolling to obtain the composite separator including the adhesive coating; further, the drying temperature is controlled to be 50-60°C.

In one specific embodiment, the D10 and D90 of the polyethylene wax particles and the inorganic particles can be achieved by adjusting the particle size distribution; the number-average molecular weight and the melting point of the polyethylene wax particles can be obtained according to a conventional technical mean in the art; the weight of the polyethylene wax particles per unit area of the adhesive coating can be adjusted through the coating thickness or areal density.

In summary, this application provides a composite separator, which includes the microporous base film obtained by the dry-process uniaxial stretching and the adhesive coating. The adhesive coating includes the polyethylene wax particles, which can play a good adhesive role, prevent dimensional changes caused by the release of internal stress, and improve the problem of wrinkling of the separator upon electrolyte injection; and the inorganic particles, which play a supporting role. By adjusting the weight ratio and the size ratio of the polyethylene wax particles and the inorganic particles, and the weight of the polyethylene wax particles per unit area, the air permeability increase before and after providing the adhesive coating and before and after hot pressing of the composite separator can be reduced on the basis of ensuring the adhesion force of the composite separator, and the electrical performance of the battery can be improved.

In a second aspect, this application provides a battery, including the composite separator of any one of the above.

Based on the characteristics of the composite separator in the first aspect of this application, the composite separator provided by this application helps to improve the electrical performance of the battery.

In one specific embodiment, the battery provided in this application further includes a positive electrode sheet, a negative electrode sheet and an electrolyte, where the positive electrode sheet includes a positive electrode current collector and a positive electrode active layer disposed on a surface of the positive electrode current collector, and the positive electrode active layer includes a positive electrode active material, a conductive agent and a binder; the negative electrode sheet includes a negative electrode current collector and a negative electrode active layer disposed on a surface of the negative electrode current collector, and the negative electrode active layer includes a negative electrode active material, a conductive agent and a binder.

The selection of the positive electrode active material, the negative electrode active material, the conductive agent and the binder is not specific, and can be a common choice in the art. Taking a lithium-ion battery as an example, the positive electrode active material is selected from one or more of lithium cobalt phosphate, lithium nickel cobalt manganese oxide, lithium iron phosphate, lithium nickel cobalt aluminate, and lithium iron manganese phosphate; the negative electrode active material is selected from one or more of artificial graphite, natural graphite, hard carbon, mesophase carbon microspheres, lithium titanate, silicon carbon, and silicon oxide; the conductive agent is selected from one or more of conductive carbon black, acetylene black, Kochen black, conductive graphite, conductive carbon fiber, carbon nanotube, single-wall carbon nanotube, multi-wall carbon nanotube, carbon fiber; and the binder is selected from one or more of polyvinylidene fluoride (PVDF), polytetrafluoroethylene (PTFE), and lithium polyacrylate (PAALi).

The electrolyte is a conventional electrolyte including lithium salt and a solvent, which is known in the art. The solvent contains vinyl carbonate (abbreviated as EC), diethyl carbonate (abbreviated as DEC), propylene carbonate (abbreviated as PC), and fluorovinyl carbonate (abbreviated as FEC).

This application provides the composite separator, which includes the microporous base film obtained by the dry-process uniaxial stretching and the adhesive coating disposed on the surface of the base film. The adhesive coating includes the polyethylene wax particles, which can play a good adhesive role, prevent dimensional changes caused by the release of internal stress, and improve the problem of wrinkling of the separator upon electrolyte injection; and the inorganic particles, which play a supporting role. By adjusting the weight ratio and the size ratio of the polyethylene wax particles and the inorganic particles, and the weight of the polyethylene wax particles per unit area, the air permeability increase before and after providing the adhesive coating and before and after hot pressing of the composite separator can be reduced on the basis of ensuring the adhesion force of the composite separator, and the electrical performance of the battery can be improved.

## BRIEF DESCRIPTION OF DRAWINGS

In order to illustrate the technical solutions in the embodiments of this application or in the prior art more clearly, the accompanying drawings required for describing the embodiments or the prior art will be briefly introduced hereinafter. It is obvious that the accompanying drawings in the following description are some embodiments of this application. For those skilled in the art, other accompanying drawings can also be obtained based on these accompanying drawings without any creative labor.

FIG. 1 is a schematic structural diagram of a composite separator provided by an embodiment of this application.
FIG. 2 is an electron microscope image of an adhesive coating provided by an embodiment of this application.

Illustration of reference signs:

1-Base film;
2- Adhesive coating.

## DESCRIPTION OF EMBODIMENTS

In order to make the purposes, technical solutions and advantages of this application clearer, the technical solutions in the embodiments of this application will be clearly and completely described below in combination with the embodiments of this application. It is obvious that the described embodiments are part of the embodiments of this application, not all of the embodiments of this application. Based on the embodiments in this application, all other embodiments obtained by those skilled in the art without any creative labor fall within the protection scope of this application.

Example 1

The separator provided in this Example includes a PP microporous film and an adhesive coating on a surface of the PP microporous film. The PP microporous film has a thickness of 14 $\mu$m, a maximum pore size of 30 nm, and a porosity of 40%. The adhesive coating includes polyethylene wax particles, boehmite, ammonium polyacrylate, polyethyl acrylate and polyether-modified polysiloxane. The parameters of the polyethylene wax particles and the boehmite are shown in Table 1.

The preparation method of the separator provided in this Example includes the following steps.

Step 1: an adhesive coating slurry is prepared by the following:
adding ammonium polyacrylate to deionized water, and dispersing at a rotation speed of 1500 rpm for 10 min; adding boehmite powder with D90 of 2.4 $\mu$m, and dispersing at a rotation speed of 3000 rpm for 40 min to obtain a first preform; adding an emulsion including the polyethylene wax particles to deionized water, and dispersing at a rotation speed of 2000 rpm for 20 min to obtain a second preform; adding the second preform to the first preform, and dispersing at a rotation speed of 3000 rpm for 30 min to obtain a first mixture; adding the polyethyl acrylate to the first mixture, and dispersing at a rotation speed of 1500 rpm for 30 min to obtain a second mixture; adding the polyether-modified polysiloxane to the second mixture, and dispersing at a rotation speed of 1000 rpm for 20 min to obtain the adhesive coating slurry. During the above preparation process, each dispersion temperature is set to be 15°C.

In the adhesive coating slurry, the total weight of the polyethylene wax particles and the boehmite accounts for 8 wt% of the slurry system, the weight of the boehmite accounts for 40 wt% of the total weight of the polyethylene wax particles and the boehmite, the weight of the ammonium polyacrylate accounts for 2 wt% of the weight of the boehmite, the weight of the polyethyl acrylate accounts for 3 wt% of the total weight of the polyethylene wax particles and the boehmite, and the weight of the polyether-modified polysiloxane accounts for 0.3 wt% of the slurry system.

Step 2: the adhesive coating slurry is coated on the surface of an uniaxial stretching PP microporous film with a

thickness of 14 $\mu$m, a maximum pore size of 30 nm and a porosity of 40%, followed by drying at an oven at 50°C, and rolling to obtain the separator, where the weight of the polyethylene wax particles is 0.6 g/m$^2$ per unit area of the coating.

Example 2

The separator and the preparation method thereof provided in this Example can refer to Example 1, except that the polyethylene wax particles have a D10 of 0.75 $\mu$m.

Example 3

The separator and the preparation method thereof provided in this Example can refer to Example 1, except that the polyethylene wax particles have a D10 of 1.2 $\mu$m.

Example 4

The separator and the preparation method thereof provided in this Example can refer to Example 1, except that the polyethylene wax particles have a D10 of 1.5 $\mu$m.

Example 5

The separator and the preparation method thereof provided in this Example can refer to Example 1, except that the polyethylene wax particles have a D10 of 0.12 $\mu$m.

Example 6

The separator and the preparation method thereof provided in this Example can refer to Example 1, except that the polyethylene wax particles have a D10 of 1.56 $\mu$m.

Example 7

The separator and the preparation method thereof provided in this Example can refer to Example 1, except that the base film has a maximum pore size of 25 nm, the polyethylene wax particles have a D10 of 0.6 $\mu$m and a D90 of 1 $\mu$m, and the boehmite has a D90 of 0.8 $\mu$m.

Example 8

The separator and the preparation method thereof provided in this Example can refer to Example 7, except that the polyethylene wax particles have a D90 of 2 $\mu$m and the boehmite has a D90 of 1.6 $\mu$m.

Example 9

The separator and the preparation method thereof provided in this Example can refer to Example 7, except that the polyethylene wax particles have a D90 of 5 $\mu$m and the boehmite has a D90 of 4 $\mu$m.

Example 10

The separator and the preparation method thereof provided in this Example can refer to Example 7, except that the polyethylene wax particles have a D90 of 10 $\mu$m and the boehmite has a D90 of 8 $\mu$m.

Example 11

The separator and the preparation method thereof provided in this Example can refer to Example 1, except that the base film has a maximum pore size of 35 nm, the polyethylene wax particles have a D10 of 0.8 $\mu$m and a D90 of 3 $\mu$m, the boehmite has a D90 of 2.4 $\mu$m, and the weight of the polyethylene wax particles per unit area of the adhesive coating is 0.2 g/m$^2$.

Example 12

The separator and the preparation method thereof provided by this Example can refer to Example 11, except that the weight of the polyethylene wax particles per unit area of the adhesive coating is 0.6 g/m$^2$.

Example 13

The separator and the preparation method thereof provided by this Example can refer to Example 11, except that the weight of the polyethylene wax particles per unit area of the adhesive coating is 1.5 g/m$^2$.

Example 14

The separator and the preparation method thereof provided by this Example can refer to Example 11, except that the weight of the polyethylene wax particles per unit area of the adhesive coating is 4 g/m$^2$.

Example 15

The separator and the preparation method thereof provided in this Example can refer to Example 12, except that the boehmite has a D90 of 0.9 $\mu$m.

Example 16

The separator and the preparation method thereof provided in this Example can refer to Example 12, except that the boehmite has a D90 of 1.8 $\mu$m.

Example 17

The separator and the preparation method thereof provided in this Example can refer to Example 12, except that the boehmite has a D90 of 2.55 $\mu$m.

Example 18

The separator and the preparation method thereof provided in this Example can refer to Example 12, except that the polyethylene wax particles have a melting point of 85°C.

Example 19

The separator and the preparation method thereof provided in this Example can refer to Example 12, except that the polyethylene wax particles have a melting point of 135°C.

Example 20

The separator and the preparation method thereof provided in this Example can refer to Example 12, except that the polyethylene wax particles have a melting point of 90°C.

Example 21

The separator and the preparation method thereof provided in this Example can refer to Example 12, except that the polyethylene wax particles have a melting point of 100°C.

Example 22

The separator and the preparation method thereof provided in this Example can refer to Example 12, except that the polyethylene wax particles have a melting point of 120°C.

Example 23

The separator and the preparation method thereof provided in this Example can refer to Example 12, except that the polyethylene wax particles have a melting point of 130°C.

Example 24

The separator and the preparation method thereof provided in this Example can refer to Example 12, except that the weight of the boehmite accounts for 5 wt% of the total weight of the polyethylene wax particles and the boehmite.

Example 25

The separator and the preparation method thereof provided in this Example can refer to Example 12, except that the weight of the boehmite accounts for 25 wt% of the total weight of the polyethylene wax particles and the boehmite.

Example 26

The separator and the preparation method thereof provided in this Example can refer to Example 12, except that the weight of the boehmite accounts for 60 wt% of the total weight of the polyethylene wax particles and the boehmite.

Example 27

The separator and the preparation method thereof provided in this Example can refer to Example 12, except that the weight of the boehmite accounts for 75 wt% of the total weight of the polyethylene wax particles and the boehmite.

Comparative Example 1

The separator and the preparation method thereof provided in this Comparative Example can refer to Example 7, except that the polyethylene wax particles has a D90 of 0.8 $\mu$m and the boehmite has a D90 of 0.64 $\mu$m.

Comparative Example 2

The separator and the preparation method thereof provided in this Comparative Example can refer to Example 7, except that the polyethylene wax particles has a D90 of 11 $\mu$m and the boehmite has a D90 of 8.8 $\mu$m.

Comparative Example 3

The separator and the preparation method thereof provided in this Comparative Example can refer to Example 12, except that the polyethylene wax particles have a different particle size from the boehmite, see Table 1 for details.

Comparative Example 4

The separator and the preparation method thereof provided in this Comparative Example can refer to Example 12, except that the weight of the polyethylene wax particles per unit area of the adhesive coating is 0.15 g/m$^2$.

Comparative Example 5

The separator and the preparation method thereof provided in this Comparative Example can refer to Example 12, except that the weight of the polyethylene wax particles per unit area of the adhesive coating is 4.5 g/m$^2$.

Comparative Example 6

The separator and the preparation method thereof provided in this Comparative Example can refer to Example 12, except that the boehmite has a D90 of 0.6 $\mu$m.

Comparative Example 7

The separator and the preparation method thereof provided in this Comparative Example can refer to Example 12, except that the boehmite has a D90 of 2.7 $\mu$m.

Comparative Example 8

The separator and the preparation method thereof provided in this Comparative Example can refer to Example 18, except that the weight of the boehmite is zero, that is, the weight of the boehmite accounts for 0 wt% of the total weight of the polyethylene wax particles and the boehmite, and the weight of the polyethylene wax particles per unit area of the adhesive coating is 4.5 g/m$^2$.

Comparative Example 9

The separator and the preparation method thereof provided in this Comparative Example can refer to Example 19, except that the weight of the boehmite accounts for 85 wt% of the total weight of the polyethylene wax particles and the boehmite, and the weight of the polyethylene wax particles per unit area of the adhesive coating is 0.15 g/m$^2$.

Comparative Example 10

The separator and the preparation method thereof provided in this Example can refer to Example 12, except that the weight of the boehmite accounts for 80 wt% of the total weight of the polyethylene wax particles and the boehmite.

Comparative Example 11

A uniaxial stretching PP microporous film with a thickness of 14 μm, a maximum pore size of 35 nm and a porosity of 40% is taken as a control sample.

Table 1 lists and illustrates the separators provided by Examples 1-27 and Comparative Examples 1-11 to make the difference between the separators provided by Examples 1-27 and Comparative Examples 1-11 clearer.

Table 1 Illustration of the composite separators provided by Examples 1-27 and Comparative Examples 1-11

| | Base Film | Polyethylene wax particles | | | Inorganic particles | Ratio of D90 of the inorganic particles to D90 of the polyethylene wax particles | Weight of the inorganic particles / (weight of the inorganic particles + weight of the polyethylene wax particles) | Weight of the polyethylene wax particles per unit area of the adhesive coating / g/m$^2$ | Melting point of the polyethylene wax particles /°C |
|---|---|---|---|---|---|---|---|---|---|
| | Maximum pore size /nm | D10/μm | A ratio of D10 to Maximum pore size | D90/μm | D90/μm | | | | |
| Example 1 | 30 | 0.15 | *5* | 3 | 2.4 | 0.8:1 | 40wt% | 0.6 | 110 |
| Example 2 | 30 | 0.75 | 25 | 3 | 2.4 | 0.8:1 | 40wt% | 0.6 | 110 |
| Example 3 | 30 | 1.2 | 40 | 3 | 2.4 | 0.8:1 | 40wt% | 0.6 | 110 |
| Example 4 | 30 | 1.5 | *50* | 3 | 2.4 | 0.8:1 | 40wt% | 0.6 | 110 |
| Example 5 | 30 | 0.12 | 4 | 3 | 2.4 | 0.8:1 | 40wt% | 0.6 | 110 |
| Example 6 | 30 | 1.56 | 52 | 3 | 2.4 | 0.8:1 | 40wt% | 0.6 | 110 |
| Example 7 | 25 | 0.6 | 24 | 1 | 0.8 | 0.8:1 | 40wt% | 0.6 | 110 |
| Example 8 | 25 | 0.6 | 24 | 2 | 1.6 | 0.8:1 | 40wt% | 0.6 | 110 |
| Example 9 | 25 | 0.6 | 24 | *5* | 4 | 0.8:1 | 40wt% | 0.6 | 110 |
| Example 10 | 25 | 0.6 | 24 | 10 | 8 | 0.8:1 | 40wt% | 0.6 | 110 |
| Example 11 | 35 | 0.8 | 22.9 | 3 | 2.4 | 0.8:1 | 40wt% | 0.2 | 110 |
| Example 12 | 35 | 0.8 | 22.9 | 3 | 2.4 | 0.8:1 | 40wt% | 0.6 | 110 |
| Example 13 | 35 | 0.8 | 22.9 | 3 | 2.4 | 0.8:1 | 40wt% | 1.5 | 110 |

(continued)

| | Base Film | Polyethylene wax particles | | | Inorganic particles | Ratio of D90 of the inorganic particles to D90 of the polyethylene wax particles | Weight of the inorganic particles / (weight of the inorganic particles + weight of the polyethylene wax particles) | Weight of the polyethylene wax particles per unit area of the adhesive coating / g/m$^2$ | Melting point of the polyethylene wax particles /°C |
|---|---|---|---|---|---|---|---|---|---|
| | Maximum pore size /nm | D10/μm | A ratio of D10 to Maximum pore size | D90/μm | D90/μm | | | | |
| Example 14 | 35 | 0.8 | 22.9 | 3 | 2.4 | 0.8:1 | 40wt% | 4 | 110 |
| Example 15 | 35 | 0.8 | 22.9 | 3 | 0.9 | 0.3:1 | 40wt% | 0.6 | 110 |
| Example 16 | 35 | 0.8 | 22.9 | 3 | 1.8 | 0.6:1 | 40wt% | 0.6 | 110 |
| Example 17 | 35 | 0.8 | 22.9 | 3 | 2.55 | 0.85:1 | 40wt% | 0.6 | 110 |
| Example 18 | 35 | 0.8 | 22.9 | 3 | 2.4 | 0.8:1 | 40wt% | 0.6 | 85 |
| Example 19 | 35 | 0.8 | 22.9 | 3 | 2.4 | 0.8:1 | 40wt% | 0.6 | 135 |
| Example 20 | 35 | 0.8 | 22.9 | 3 | 2.4 | 0.8:1 | 40wt% | 0.6 | 90 |
| Example 21 | 35 | 0.8 | 22.9 | 3 | 2.4 | 0.8:1 | 40wt% | 0.6 | 100 |
| Example 22 | 35 | 0.8 | 22.9 | 3 | 2.4 | 0.8:1 | 40wt% | 0.6 | 120 |
| Example 23 | 35 | 0.8 | 22.9 | 3 | 2.4 | 0.8:1 | 40wt% | 0.6 | 130 |
| Example 24 | 35 | 0.8 | 22.9 | 3 | 2.4 | 0.8:1 | 5wt% | 0.6 | 110 |
| Example 25 | 35 | 0.8 | 22.9 | 3 | 2.4 | 0.8:1 | 25wt% | 0.6 | 110 |
| Example 26 | 35 | 0.8 | 22.9 | 3 | 2.4 | 0.8:1 | 60wt% | 0.6 | 110 |
| Example 27 | 35 | 0.8 | 22.9 | 3 | 2.4 | 0.8:1 | 75wt% | 0.6 | 110 |
| Comparative Example 1 | 25 | 0.6 | 24 | 0.8 | 0.64 | 0.8:1 | 40wt% | 0.6 | 110 |
| Comparative Example 2 | 25 | 0.6 | 24 | 11 | 8.8 | 0.8:1 | 40wt% | 0.6 | 110 |
| Comparative Example 3 | 35 | 0.4 | 11.4 | 2.4 | 3 | 1:0.8 | 40wt% | 0.6 | 110 |
| Comparative Example 4 | 35 | 0.8 | 22.9 | 3 | 2.4 | 0.8:1 | 40wt% | 0.15 | 110 |
| Comparative Example 5 | 35 | 0.8 | 22.9 | 3 | 2.4 | 0.8:1 | 40wt% | 4.5 | 110 |
| Comparative Example 6 | 35 | 0.8 | 22.9 | 3 | 0.6 | 0.2:1 | 40wt% | 0.6 | 110 |
| Comparative Example 7 | 35 | 0.8 | 22.9 | 3 | 2.7 | 0.9:1 | 40wt% | 0.6 | 110 |
| Comparative Example 8 | 35 | 0.8 | 22.9 | 3 | 2.4 | 0.8:1 | 0wt% | 4.5 | 85 |
| Comparative Example 9 | 35 | 0.8 | 22.9 | 3 | 2.4 | 0.8:1 | 85wt% | 0.15 | 135 |
| Comparative Example 10 | 35 | 0.8 | 22.9 | 3 | 2.4 | 0.8:1 | 80wt% | 0.6 | 110 |

(continued)

| | Base Film | Polyethylene wax particles | | | Inorganic particles | Ratio of D90 of the inorganic particles to D90 of the polyethylene wax particles | Weight of the inorganic particles / (weight of the inorganic particles + weight of the polyethylene wax particles) | Weight of the polyethylene wax particles per unit area of the adhesive coating / $g/m^2$ | Melting point of the polyethylene wax particles /°C |
|---|---|---|---|---|---|---|---|---|---|
| | Maximum pore size /nm | D10/μm | A ratio of D10 to Maximum pore size | D90/μm | D90/μm | | | | |
| Comparative Example 11 | 35 | / | / | / | / | / | / | / | / |

For the composite separators provided by Examples 1-27 and Comparative Examples 1-11, the air permeability before and after providing the adhesive coating and the air permeability before and after hot pressing are measured to calculate the air permeability increase, and the adhesion force and the wrinkles of the composite separator upon electrolyte injection are measured. The measurement method is as follows, and the measurement results are shown in Table 2.

Measurement method

1. Air permeability increase of the adhesive coating: the air permeability of the base film is measured, and the air permeability of the composite separator after providing the adhesive coating slurry is measured; the absolute value of the difference between the two air permeability is referred as the air permeability increase of the adhesive coating. The method for measuring the air permeability refers to GB/T 36363-2018.

2. Air permeability increase of the composite separator after hot pressing: the air permeability of the composite separator before hot pressing is measured; then the same composite separator is placed between two pieces of flat non-woven fabric and placed in a hot pressing machine, the area of each piece of flat non-woven fabric being larger than that of the separator; the hot pressing is performed at the pressure of 1 Mpa for 60s at 80°C; the air permeability of the composite separator after hot pressing is measured; the difference between the air permeability after hot pressing and the air permeability before hot pressing is calculated to obtain the air permeability increase of the composite separator after hot pressing. The method for measuring the air permeability refers to GB/T 36363-2018.

3. Adhesion force: an A4 paper, the non-woven fabric, a positive electrode material with a width of 20mm, a composite separator with a width of 15mm and a silicone strip with a width of 10mm are stacked and centered from bottom to top in sequence, and then they are placed on the lower plate of the hot pressing machine for hot pressing. The hot pressing is carried out at 80°C under 1MPa for 60s. The positive electrode sheet and the composite microporous separator are separately fixed on a tensile testing machine, and peeled off at an angle of 180° at a speed of 200mm/min. The measurement is repeated five times to obtain an average value.

4. Confirmation of wrinkles upon electrolyte injection: the composite separator is assembled for simulating a cell and the electrolyte is injected; after standing for 5 days, the cell is disassembled; the number of wrinkles per square meter of the composite separator is observed and recorded. A case of no wrinkle in the separator represents "excellent", a case of 1-2 wrinkles in the separator represents "good", and a case of more than 3 wrinkles represents "bad".

Table 2 Measurement results of the separators provided by Examples 1-27 and Comparative Examples 1-11

| | Air permeability increase of the adhesive coating sec/100ml | Air permeability increase of the composite separator before and after hot pressing sec/100ml | Adhesion force N/m | Wrinkles upon electrolyte injection |
|---|---|---|---|---|
| Example 1 | 12.2 | 5.9 | 2 | Excellent |
| Example 2 | 10.4 | 7.6 | 2.2 | Excellent |
| Example 3 | 9.6 | 8.1 | 2.8 | Excellent |
| Example 4 | 8.3 | 9.3 | 3.4 | Excellent |
| Example 5 | 12.6 | 5.1 | 1.8 | Excellent |
| Example 6 | 7.8 | 12.6 | 3.6 | Excellent |
| Example 7 | 14.3 | 9.8 | 2.6 | Excellent |
| Example 8 | 13.3 | 8.3 | 2.7 | Excellent |
| Example 9 | 10.1 | 6.9 | 2.2 | Excellent |
| Example 10 | 9.8 | 5.9 | 1.6 | Excellent |
| Example 11 | 6.2 | 3.3 | 1.3 | Excellent |
| Example 12 | 11.5 | 7.2 | 2.3 | Excellent |
| Example 13 | 16.3 | 11.8 | 2.7 | Excellent |
| Example 14 | 19.8 | 12.6 | 3.2 | Excellent |
| Example 15 | 12.1 | 13.1 | 3 | Excellent |
| Example 16 | 11.9 | 8.1 | 2.6 | Excellent |
| Example 17 | 10.3 | 5.2 | 1.4 | Excellent |
| Example 18 | 11.8 | 12.3 | 4.6 | Excellent |
| Example 19 | 12.2 | 4.6 | 1.6 | Excellent |
| Example 20 | 12.3 | 9.6 | 2.8 | Excellent |
| Example 21 | 12 | 6.8 | 2.5 | Excellent |
| Example 22 | 12.4 | 6.1 | 2.1 | Excellent |
| Example 23 | 12.1 | 5.9 | 1.9 | Excellent |
| Example 24 | 8.6 | 8.5 | 3.3 | Excellent |
| Example 25 | 9.2 | 5.3 | 2.7 | Excellent |
| Example 26 | 10.1 | 4.5 | 2.1 | Excellent |
| Example 27 | 11 | 3.8 | 2 | Excellent |
| Comparative Example 1 | 29.6 | 28.9 | 2.9 | Excellent |
| Comparative Example 2 | 9.1 | 5.5 | 1 | Good |
| Comparative Example 3 | 29.7 | 2 | 0.2 | Bad |
| Comparative Example 4 | 3.1 | 1.4 | 0.6 | Bad |
| Comparative Example 5 | 30.7 | 22.8 | 4.1 | Excellent |
| Comparative Example 6 | 15.2 | 26.2 | 3.3 | Excellent |
| Comparative Example 7 | 10 | 4.2 | 0.7 | Bad |
| Comparative Example 8 | 47.4 | 79.5 | 6.9 | Excellent |
| Comparative Example 9 | 3.6 | 1.3 | 0.3 | Bad |
| Comparative Example 10 | 20.2 | 3.7 | 1.2 | Excellent |

(continued)

|  | Air permeability increase of the adhesive coating sec/100ml | Air permeability increase of the composite separator before and after hot pressing sec/100ml | Adhesion force N/m | Wrinkles upon electrolyte injection |
|---|---|---|---|---|
| Comparative Example 11 | / | / | / | Bad |

According to the data provided in Tables 1-2, it can be seen that compared with Comparative Examples 1-11, the composite separators provided in Examples 1-27 have no wrinkles upon electrolyte injection, and have good adhesion with the positive electrode sheets. On this basis, the air permeability increase before and after providing the adhesive coating and the air permeability increase before and after hot pressing are effectively reduced, solving the technical problems that need to be solved in this application.

According to the data provided in Examples 1-6, it can be seen that as the ratio of the D10 of the polyethylene wax particles to the maximum pore size of the base film increases, the adhesion force between the composite separator and the electrode sheet increases continuously, and the air permeability increase of the adhesive coating decreases. However, when the ratio of the D10 of the polyethylene wax particles to the maximum pore size of the base film is greater than 50, the air permeability increase of the composite separator before and after hot pressing increases. Therefore, the ratio of the D10 of the polyethylene wax particles to the maximum pore size of the base film should be within 3-50, further 25-40.

According to the data provided in Examples 7-10 and Comparative Examples 1-2, it can be seen that as the D90 of the polyethylene wax particles increases, the air permeability increase before and after providing the adhesive coating decreases continuously, and the air permeability increase of the composite separator before and after hot pressing decreases continuously. However, considering the thickness of the adhesive coating, the D90 of the polyethylene wax particles should be within 1-10$\mu$m, and further preferably 2-5$\mu$m. In contrast, the D90 of the polyethylene wax particles in Comparative Examples 1-2 is too small or too high, which is prone to the problems of excessive air permeability increase, a decrease in the adhesion force of the composite separator and the wrinkled surface of the base film.

According to the data provided by Examples 11-14 and Comparative Examples 4-5, it can be seen that as the weight of the polyethylene wax particles per unit area of the adhesive coating increases, the adhesion force of the adhesive coating increases continuously, but meanwhile the air permeability increase of the adhesive coating and the air permeability increase of the composite separator before and after hot pressing also increase continuously. Therefore, the weight of the polyethylene wax particles per unit area of the adhesive coating should be controlled within 0.2-4g/m$^2$, further preferably within 0.3-1.5 g/m$^2$. In contrast, in Comparative Examples 4-5, the weight of the polyethylene wax particles per unit area of the adhesive coating being too small will affect the adhesion force between the composite separator and the electrode sheet, resulting in the problem of wrinkled surface of the base film. While the weight of the polyethylene wax particles being too high will lead to an increase in the air permeability increase, affecting the air permeability of the composite separator.

According to the data provided in Examples 15-17, it can be seen that, in a case that the particle size of the polyethylene wax particles is constant, as the D90 of the inorganic particles increases continuously, the air permeability increase of the composite separator before and after providing the adhesive coating and the air permeability increase of the composite separator before and after hot pressing decrease continuously, while the adhesion force of the adhesive coating decreases. Referring to Comparative Examples 3 and 7, in a case that the ratio of the D90 of the inorganic particles to the D90 of the polyethylene wax particles is greater than 0.85:1, it may cause insufficient adhesive area between the polyethylene wax particles and the electrode sheet and then cause too small adhesion force between the composite separator and the electrode sheet, leading to the problem of the wrinkled surface of the base film. Conversely, referring to Comparative Example 6, in a case that the ratio of the D90 of the inorganic particles to the D90 of the polyethylene wax particles is too low, it may cause excessive deformation of the polyethylene wax particles during the hot pressing process, blocking the pores in the surface of the base film, and affecting the air permeability of the composite separator. Therefore, the ratio of the D90 of the inorganic particles to the D90 of the polyethylene wax particles should be within (0.3-0.85): 1, and further preferably within (0.5-0.85): 1.

According to the data provided in Examples 18-23, it can be seen that as the melting point of the polyethylene wax particles increases, the air permeability increase of the composite separator before and after hot pressing decreases continuously, while the adhesion force of the adhesive coating also decreases continuously. Therefore, the melting point of the polyethylene wax particles should be within 90-130°C, and further preferably within 100-120°C.

According to the data provided in Examples 24-27, it can be seen that as the weight ratio of the inorganic particles increases, the air permeability increase of the composite separator before and after hot pressing decreases, but the air permeability increase before and after providing the adhesive coating increases continuously. In contrast, in Comparative Example 10, in a case that the weight ratio of the inorganic particles exceeds 75wt%, the air permeability increase of the adhesive coating increases suddenly, and the weight of the polyethylene wax particles per unit area of the adhesive coating is too low, affecting the adhesion between the composite separator and the electrode sheet. Therefore, the weight of the inorganic particles is controlled to account for 5-75wt%, further preferably 25-60wt%, of the total weight of the polyethylene wax particles and the inorganic particles.

To sum up, for the composite separator including the polyethylene wax particles and the inorganic particles provided by this application, on the basis of ensuring the adhesion force between the composite separator and the electrode sheet and solving the problem of wrinkles on the surface of the separator, the air permeability increase caused by providing the adhesive coating and the air permeability increase of the composite separator before and after hot pressing are reduced, which helps to improve the electrical performance of the battery.

It should be noted that the same effect can be achieved in a case that the base film in the above examples is replaced with a PE microporous film, a PP double-layer film, a PP/PP/PP three-layer coextruded microporous film and a PP/PE/PP three-layer coextruded microporous film. Similarly, the same effect can be achieved in a case that the inorganic particles in the above examples are replaced with alumina, silica, magnesium oxide, titanium dioxide, etc.

Finally, it should be illustrated that the above embodiments are only intended to illustrate the technical solutions of this application, rather than to limit the technical solutions of this application. Although the application has been described in detail with reference to the above embodiments, those skilled in the art should understand that an amendment may be made on the technical solutions described in the above embodiments, or an equivalent replacement may be made on some or all of the technical features thereof. However, these amendments or replacements do not cause the essence of the corresponding technical solutions to deviate from the scope of the technical solutions of the various embodiments in this application.

**Claims**

1. A composite separator, wherein the composite separator comprises a base film and an adhesive coating, the adhesive coating is provided at an outermost layer of the composite separator, and the adhesive coating comprises polyethylene wax particles and inorganic particles;

the polyethylene wax particles per unit area of the adhesive coating have a weight of 0.2 - 4 g/m$^2$;
a ratio of D90 of the inorganic particles to D90 of the polyethylene wax particles is (0.3-0.85): 1;
a weight of the inorganic particles accounts for 5 - 75 wt% of a total weight of the polyethylene wax particles and the inorganic particles.

2. The composite separator according to claim 1, wherein the polyethylene wax particles have a melting point of 90 - 130°C.

3. The composite separator according to claim 1, wherein the polyethylene wax particles have a number-average molecular weight of 500-20,000.

4. The composite separator according to claim 1, wherein the polyethylene wax particles satisfy at least one or more of the following conditions:

a. D10 of the polyethylene wax particles is greater than a maximum pore size of the base film;
b. the polyethylene wax particles have a D90 of 1 - 10 $\mu$m.

5. The composite separator according to claim 1, wherein a ratio of D10 of the polyethylene wax particles to a maximum pore size of the base film is 3-50.

6. The composite separator according to any one of claims 1-5, wherein the inorganic particles are one or more of alumina, boehmite, silica, magnesium oxide, and titanium dioxide.

7. The composite separator according to any one of claims 1-6, wherein the adhesive coating further comprises one or more of an adhesive agent, a surfactant, and a dispersant;

wherein the adhesive agent is one or more of polyacrylate, polyacrylamide, polymethyl methacrylate, polybutyl methacrylate, polyethyl acrylate, styrene-acrylic latex, polyvinyl acetate, styrene-butadiene latex, ethylene-vinyl acetate copolymer, and polyvinylpyrrolidone;
the surfactant is one or more of polyether-modified polysiloxane, alkylphenol polyoxyethylene ether, fatty alcohol polyoxyethylene ether, fatty acid polyoxyethylene ether, fatty amine polyoxyethylene ether, and fluoroalkyl ethoxy alcohol ether;

the dispersant is one or more of sodium polyacrylate, ammonium polyacrylate, carboxylate, and sulfonate. 8. The composite separator according to claim 7, wherein at least one or more of the following conditions are satisfied:

    a: a weight of the dispersant accounts for 0.2 - 5 wt% of a total weight of the inorganic particles;
    b: a weight of the adhesive agent accounts for 2 - 10 wt% of the total weight of the polyethylene wax particles and the inorganic particles.

8. The composite separator according to any one of claims 1-8, wherein the base film has a thickness of 4 - 25 $\mu$m, a maximum pore size of 20 - 60 nm, and a porosity of 20-60%.

9. A battery, comprising the composite separator according to any one of claims 1-9.

FIG. 1

FIG. 2

## INTERNATIONAL SEARCH REPORT

| International application No. |
|---|
| **PCT/CN2023/086286** |

| A. | CLASSIFICATION OF SUBJECT MATTER |
|---|---|
| | H01M50/46(2021.01)i |

According to International Patent Classification (IPC) or to both national classification and IPC

| B. | FIELDS SEARCHED |
|---|---|

Minimum documentation searched (classification system followed by classification symbols)

   IPC:H01M

Documentation searched other than minimum documentation to the extent that such documents are included in the fields searched

Electronic data base consulted during the international search (name of data base and, where practicable, search terms used)

   VEN, CNABS, CNTXT, WOTXT, EPTXT, USTXT, CNKI, IEEE: 电池, 隔膜, 分隔件, 隔离件, 涂层, 聚乙烯蜡, 陶瓷, 无机, 氧化铝, battery, separator, coating, layer, PE 1w wax, ceramic, inorganic, alumina, Al2O3

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114374058 A (WUHAN ZHONGXING INNOVATIVE MATERIAL TECHNOLOGIES CO., LTD.) 19 April 2022 (2022-04-19) description, paragraphs 6-74, and figures 1-5 | 1-10 |
| Y | CN 114361717 A (ZHUHAI COSMX BATTERY CO., LTD.) 15 April 2022 (2022-04-15) description, paragraphs 4-17 and 55 | 1-10 |
| A | CN 103247770 A (DONGGUAN AMPEREX TECHNOLOGY LTD.) 14 August 2013 (2013-08-14) entire document | 1-10 |
| A | CN 111192996 A (SHANDONG HAIKE INNOVATION RESEARCH INSTITUTE CO., LTD.) 22 May 2020 (2020-05-22) entire document | 1-10 |
| A | CN 113078411 A (SHANDONG HAIKE INNOVATION RESEARCH INSTITUTE CO., LTD.) 06 July 2021 (2021-07-06) entire document | 1-10 |
| A | US 2022311095 A1 (SAMSUNG SDI CO., LTD.) 29 September 2022 (2022-09-29) entire document | 1-10 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 July 2023** | **13 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/086286**

| Patent document cited in search report | | | Publication date (day/month/year) | Patent family member(s) | | | Publication date (day/month/year) |
|---|---|---|---|---|---|---|---|
| CN | 114374058 | A | 19 April 2022 | None | | | |
| CN | 114361717 | A | 15 April 2022 | None | | | |
| CN | 103247770 | A | 14 August 2013 | US | 2014322587 | A1 | 30 October 2014 |
| | | | | US | 9431643 | B2 | 30 August 2016 |
| CN | 111192996 | A | 22 May 2020 | None | | | |
| CN | 113078411 | A | 06 July 2021 | None | | | |
| US | 2022311095 | A1 | 29 September 2022 | CN | 115133224 | A | 30 September 2022 |
| | | | | KR | 20220134170 | A | 05 October 2022 |
| | | | | EP | 4071873 | A1 | 12 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310256215

- CN 114374058 A